# FASCICULE DE BREVET EUROPEEN

(11) **EP 1 739 299 B1**
(45) Date de publication et mention de la délivrance du brevet: **04.05.2016**
(21) Numéro de dépôt: 06076228.3
(22) Date de dépôt: 14.06.2006
(51) Int. Cl.: F02K 1/76, E05B 17/22

(54) **Dispositif de verrouillage pour inverseur de poussée de turboréacteur**
Verriegelung für einen Schubumkehrer eines Strahltriebwerks
Locking device for a jet engine thrust reverser

(30) Priorité: 30.06.2005 FR 0506679
(43) Date de publication de la demande: 03.01.2007
(73) Titulaire: SNECMA, 75015 Paris (FR)
(72) Inventeur: Beutin, Bruno, 91000 Evry (FR); Tesnière, Marc, 91750 Champcueil (FR)
(74) Mandataire: Intès, Didier Gérard André

(56) Documents cités:
- EP-A- 1 457 660
- FR-A- 2 488 335
- FR-A- 2 683 580
- US-A- 5 826 823
- US-A- 6 021 636

## Description

### 1-Domaine technique et arrière-plan de l'invention

La présente invention concerne le domaine des inverseurs de poussée de turboréacteur d'appareil aéronautique et plus particulièrement les dispositifs de verrouillage et les systèmes de détection de fermeture et de verrouillage de tels inverseurs.

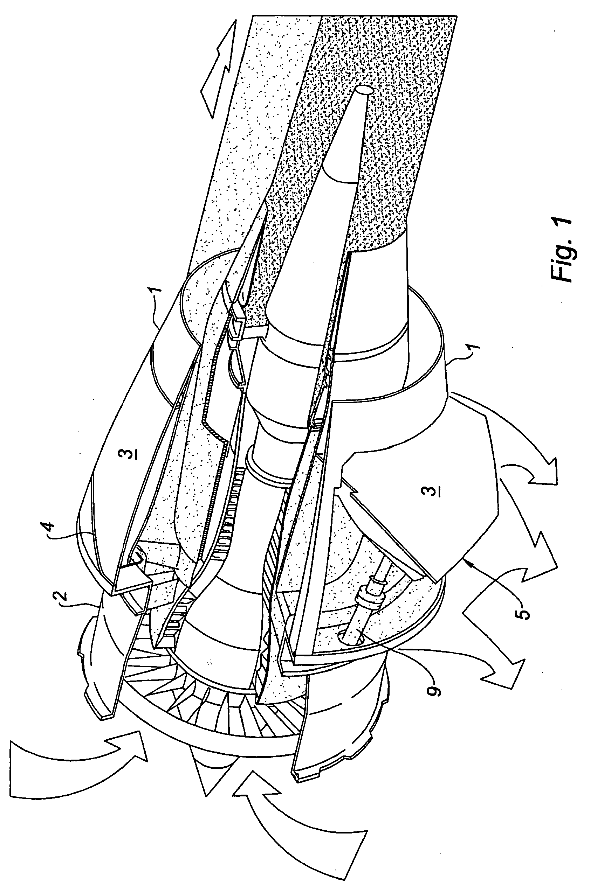

L'invention s'adresse indifféremment aux inverseurs à portes pivotantes, comme celui équipant le turboréacteur à double flux de la figure 1, aux inverseurs à grilles protégées par des coques rétractables (non-illustré) et aux inverseurs à coquilles basculantes (non-illustré) montés en aval du fuselage.

De façon générale, comme visible sur la figure 1, les inverseurs 1 de turboréacteur 2 comprennent des éléments mobiles 3 entre une position fermée 4 et une position ouverte 5. La position fermée 4 permet de laisser s'écouler librement le flux d'air ou de gaz chauds éjecté vers l'arrière afin de conférer, par réaction, une poussée vers l'avant au turboréacteur 2 et à l'appareil aéronautique. La position ouverte 5 permet de dévier tout ou partie du flux latéralement, vers l'avant, pour obtenir une inversion de la poussée du turboréacteur 2 destinée à freiner l'appareil lors d'un atterrissage.

Il est capital que les éléments mobiles 3 des inverseurs de poussée 1 restent fermés pendant la totalité du temps de décollage et de vol de l'appareil.

### 2-Etat de la technique et problème posé

A cet effet, les éléments mobiles des inverseurs de poussée de type connus, sont maintenus en position fermée par un système de verrouillage redondant comprenant des dispositifs de verrouillage primaire, secondaire et éventuellement tertiaire, comme décrit par exemple, dans le brevet EP-A-0 843 089.

Ce système met en oeuvre un grand nombre de capteurs pour surveiller l'état de tous les verrous ainsi que la fermeture de chaque élément mobile d'inverseur, un capteur étant affecté respectivement à chacun des verrous primaire, secondaire et tertiaire, d'autres capteurs étant en outre disposés à proximité de la position de fermeture de l'élément mobile pour contrôler sa fermeture.

Ces capteurs sont destinés à être reliés à une centrale de surveillance ("monitoring") pour vérifier, au niveau du poste de pilotage, que les inverseurs de poussée des réacteurs de l'appareil sont bien fermés et verrouillés.

L'inconvénient est que la centrale dispose d'un nombre réduit d'entrées, seule une ou deux entrées étant affectées à chaque élément mobile et que, du fait du grand nombre de capteurs, on ne peut pas relier directement tous ces capteurs à la centrale de surveillance.

Il s'agit donc de relier la centrale de surveillance uniquement à un ou deux détecteurs par élément mobile pour surveiller à la fois que l'élément mobile est bien fermé et que le verrouillage est bien enclenché.

Le document FR-A-2 488 335 décrit précisément un dispositif de verrouillage d'un élément mobile d'inverseur à grille muni d'un système permettant de détecter à la fois l'arrivée de l'élément mobile en position de fermeture et l'actionnement du dispositif de verrouillage. Ce dispositif de verrouillage comprend :
- un crochet lié fixement à l'élément mobile,
- un loquet basculant muni d'un plot crochetable coopérant avec le crochet et,
- un système de double détection de fermeture et de verrouillage de l'élément mobile d'inverseur, le système comprenant un capteur sur lequel agit un levier actionné par la fermeture de l'élément mobile et par le basculement du loquet de verrouillage.

Le levier est articulé sur la partie basculante du loquet de verrouillage et comporte deux bras, l'un en contact avec la base du crochet de l'élément mobile et l'autre avec le capteur.

Un inconvénient de ce système de détection est qu'il ne permet pas de détecter une défaillance lorsqu'une des pièces coopérant au verrouillage est détériorée. Dans de tels cas, par exemple si la pointe recourbée du crochet est cassée ou si le plot de crochetage est arraché ou encore si l'élément mobile (porte) est faussé, les dispositifs de détection de type connu peuvent délivrer une indication selon laquelle les éléments mobiles des inverseurs sont bien fermés et les verrous sont bien enclenchés, alors qu'un élément mobile d'inverseur mal verrouillé risque de s'ouvrir en vol, notamment au décollage, ce qui est la pire des circonstances. Les documents US5826823 et EP1457660 décrivent également des inverseurs de poussée mais qui ne permettent pas de résoudre les problèmes evoqués ci-dessus. Le but de l'invention est de pallier aux inconvénients des solutions actuelles et de fournir un système de détection de fermeture et de verrouillage d'un élément mobile d'inverseur de poussée de turboréacteur, qui permette de détecter une détérioration des pièces qui coopèrent au verrouillage, notamment une rupture d'une pièce d'un dispositif de verrouillage primaire à crochet et à plot crochetable, comme une rupture de la pointe recourbée du crochet et/ou une destruction du plot crochetable.

Il s'agit en particulier d'utiliser un seul capteur de détection pour assurer une double fonction : détecter la présence du plot de verrouillage en position de fermeture et la présence de la pointe du crochet de verrouillage en position enclenchée afin d'obtenir uniquement un ou deux signaux pour chaque élément mobile d'inverseur surveillé et de relier directement les systèmes de détection de fermeture et de verrouillage des éléments mobiles aux quelques entrées disponibles à cet effet sur une centrale de surveillance ("monitoring") telle qu'installée actuellement sur les appareils aéronautiques.

### 3-Exposé de l'invention

Ces objectifs sont atteints selon l'invention avec un dispositif de verrouillage à crochet et à plot crochetable, Le dispositif de verrouillage étant muni d'un système de double détection permettant de s'assurer à la fois de la fermeture de l'élément mobile et de l'engagement du verrouillage, grâce à la combinaison d'un moyen de détection de fermeture du plot crochetable de l'élément mobile et d'un moyen de détection de la pointe du crochet de verrouillage en position enclenchée sur le plot, les moyens de détection agissant en combinaison sur un capteur, le capteur étant actionné seulement lorsque le plot de verrouillage est en position de fermeture et que la pointe recourbée du crochet est en position engagée avec le plot.

Ainsi le système de double détection a pour fonctions d'une part, de détecter la présence du plot de verrouillage à l'endroit correspondant à la fin de course de fermeture de l'élément mobile, endroit qui correspond à sa position d'engagement avec le crochet et de détecter la présence de la pointe de la partie recourbée du crochet à l'endroit correspondant à sa position enclenchée sur le plot.

De façon avantageuse, un tel système permet de vérifier la condition cumulative dans laquelle le plot de verrouillage est en position de fermeture et dans laquelle le crochet de verrouillage est en position enclenchée, ce qui est la condition combinée qui permet de s'assurer que l'élément mobile est bien en position fermée avec un plot de verrouillage intègre et que le verrouillage est effectif avec un crochet intègre jusqu'à sa pointe.

L'invention concerne un inverseur de poussée tel que défini par la revendication 1. Un tel inverseur de poussée comprend un dispositif de verrouillage d'un élément mobile d'inverseur de poussée, comprenant :
- un crochet présentant une extrémité recourbée,
- une pièce crochetable destinée à être montée sur l'élément mobile et à coopérer avec ledit crochet et,
- un système de double détection de fermeture et de verrouillage comprenant un capteur,
avec la particularité qu'il comprend en outre un premier moyen de détection de la pièce crochetable et d'activation d'un second moyen de détection de l'extrémité recourbée du crochet.

Le premier moyen de détection comprend un levier d'armement

De préférence, le crochet et le levier d'armement sont articulés autour d'un même axe.

De préférence, le levier d'armement comporte deux bras situés de part et d'autre de l'axe, le premier bras ayant une extrémité susceptible de venir en contact avec la pièce crochetable, le second bras ayant une extrémité reliée au second moyen de détection.

Le second moyen comprend une pièce flottante faisant office de palpeur et/ou au moins une pièce mobile reliée au capteur pour détecter la présence de la partie recourbée du crochet sur la localisation de la position enclenchée.

L'invention s'applique à un dispositif de verrouillage primaire de l'élément mobile.

L'invention s'applique également à un turboréacteur muni d'un inverseur de poussée équipé du dispositif de verrouillage.

### 4-Description des figures

D'autres particularités ou avantages de l'invention apparaîtront clairement dans la suite de la description donnée à titre d'exemple non-limitatif et faite en regard des dessins annexés sur lesquels :
- la figure 1, présentée précédemment, est une vue écorchée d'un turboréacteur muni d'inverseurs de poussée à portes pivotantes de type connu, la demi-vue supérieure montrant une porte d'inverseur en position fermée et la demi-vue inférieure montrant une porte d'inverseur ouverte ;
- la figure 2 est une vue de dessous d'une porte d'inverseur maintenue en position fermée par un dispositif de verrouillage muni d'un système de détection de fermeture et de verrouillage selon l'invention ;
- les figures 3 et 4 sont des vues de dessous du dispositif de verrouillage et du système de détection selon l'invention, lorsque la ferrure de porte est ouverte puis fermée, respectivement ;
- les figures 5 à 9 sont des vues planes du dispositif de verrouillage muni du système de détection selon l'invention, au cours d'une phase de fermeture, chaque vue montrant le dispositif lorsque, respectivement :
   - la porte est ouverte et le plot de verrouillage est en position désengagée,
   - la porte est en cours de fermeture, le plot venant au contact du système de détection,
   - le plot engage le système de détection de fermeture,
   - le crochet de verrouillage engage le plot de la porte,
   - le crochet de verrouillage est complètement engagé et actionne le système de détection de fermeture et de verrouillage selon l'invention ;

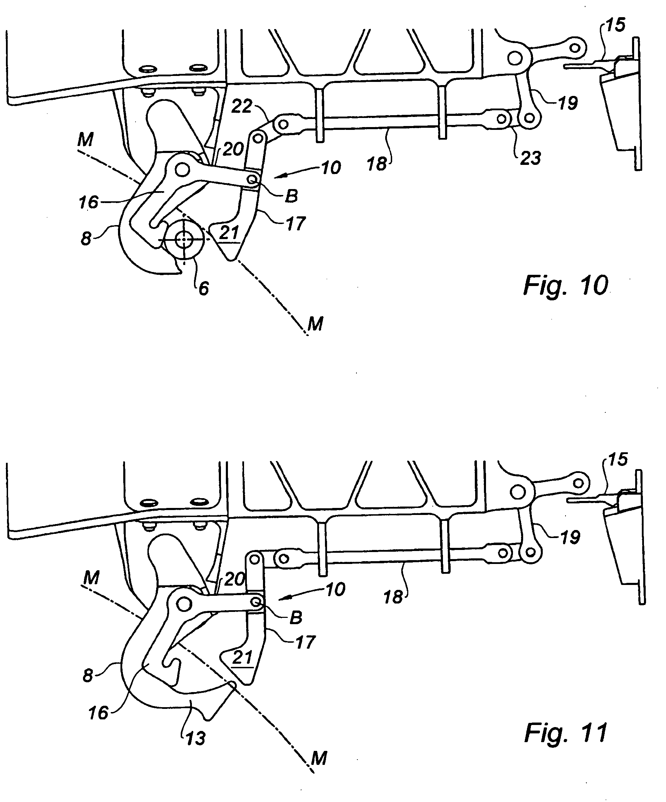

- la figure 10 est une vue plane du dispositif de verrouillage muni du système de détection selon l'invention, lorsque le plot et le crochet de verrouillage sont engagés mais que la pointe recourbée du crochet est cassée ; et,
- la figure 11 est une vue plane du dispositif de verrouillage muni du système de détection selon l'invention, lorsque le plot de verrouillage de la porte est manquant.

### 5-Description détaillée

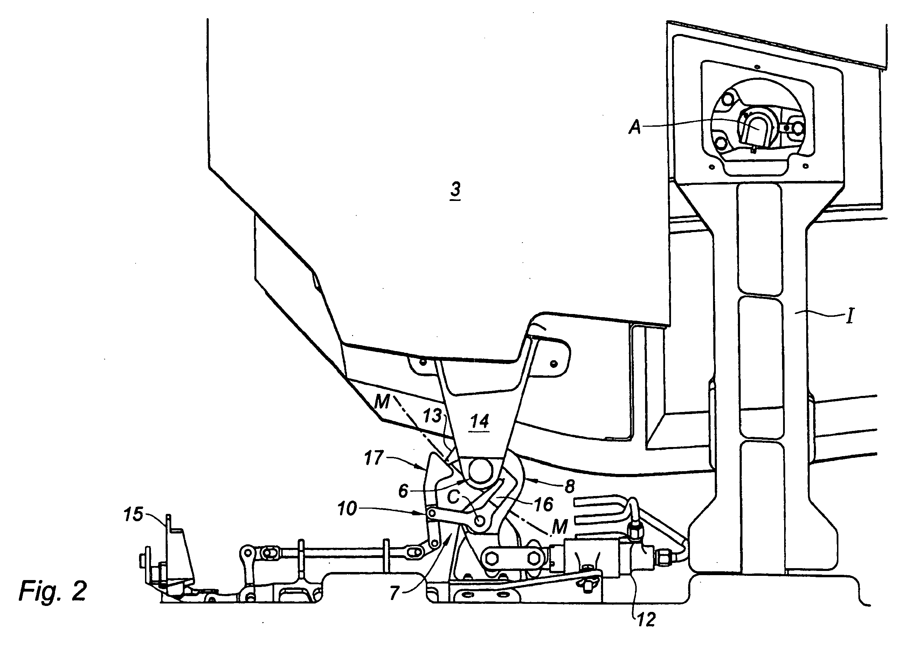

La figure 2 montre un élément mobile 3 d'un inverseur de poussée de turboréacteur, représenté dans cet exemple par une porte pivotante 3 comportant une ferrure 14 munie d'un plot de verrouillage 6, la porte étant maintenue en position fermée par un dispositif de verrouillage 7 à crochet basculant 8 muni d'un système 10 de détection combinée de fermeture et de verrouillage selon l'invention. Le système permet de vérifier à la fois que le plot 6 de l'élément mobile 3 est en position de fermeture et que la partie recourbée 13 du crochet de verrouillage 8 est en position enclenchée.

La porte mobile 3, représentée ici peut être la porte gauche de l'inverseur en vue de dessous ou inversement la porte droite en vue de dessus. La porte 3 est montée sur un axe A porté par un cadre intermédiaire I (membrure transversale) du châssis de la nacelle du turboréacteur. La porte 3 s'ouvre vers l'extérieur (haut de la figure) en suivant un mouvement de rotation indiqué par une ligne pointillée M-M sous l'effet d'un actionneur tel qu'un vérin 9 visible sur la figure 1. La porte 3 est généralement retenue par un dispositif de verrouillage secondaire agissant pour bloquer le vérin, par un dispositif de verrouillage tertiaire (non visible) monté dans la partie médiane du bord externe de la porte 3 et par deux dispositifs 7 de verrouillage primaire ancrés dans les deux bords latéraux opposés de la porte. Un seul des dispositifs de verrouillage primaire 7 apparaît au premier-plan sur la figure 2.

Le dispositif de verrouillage primaire 7 se compose d'un crochet basculant 8, solidaire du châssis de la nacelle, et d'un plot de verrouillage 6 (ou tout autre type de pièce crochetable) solidaire d'une ferrure 14 fixée sur l'élément mobile 3.

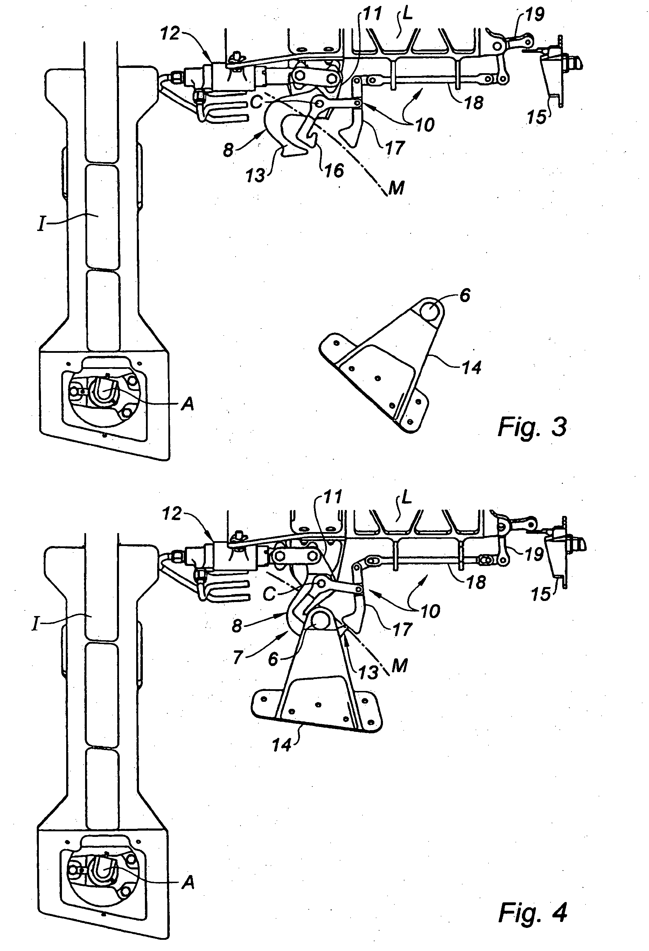

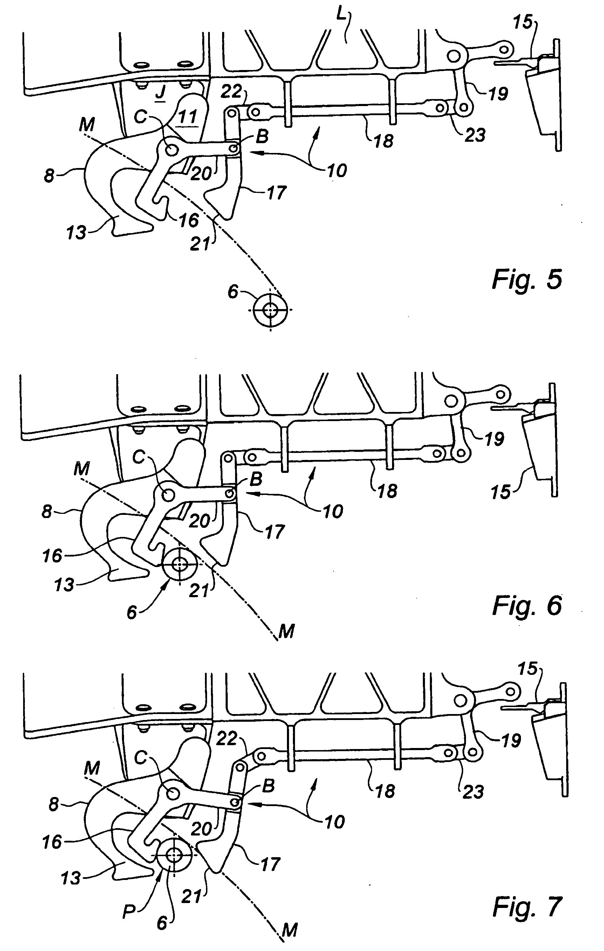

Selon la réalisation illustré sur les figures 3 et 5, le crochet 8 bascule autour d'un axe C porté par un élément J solidaire d'une poutrelle longitudinale L du châssis de nacelle d'inverseur du turboréacteur. Le crochet 8 comporte, d'un côté de l'axe C, une partie de manoeuvre 11 reliée à un vérin d'actionnement 12 et, d'un autre côté de l'axe C, une partie recourbée 13 offrant un logement pour le plot de verrouillage 6 et s'achevant par une pointe qui vient couper transversalement la ligne de trajectoire M-M du plot.

Le plot de verrouillage 6 est porté par des ferrures 14 solidaires de la porte mobile 3, l'axe du plot 6 étant sensiblement parallèle à l'axe A de la porte mobile 3.

Comme représenté sur la figure 4, le système de double détection 10 associé au dispositif de verrouillage 7 comprend un capteur 15. Le capteur 15 est par exemple un contacteur électrique ou un capteur de proximité. Il est prévu que le système de double détection, selon l'invention, délivre un signal électrique, uniquement si le plot de verrouillage 6 est en position d'engagement (ce qui implique que l'élément mobile 3 est en position fermée) et si le crochet 8 est enclenché. Le capteur 15 est donc, comme représenté sur la figure 4, dans un état fermé permettant la transmission d'un signal électrique, lorsque le système 10 détecte à la fois la présence du plot de verrouillage 6 en position de fermeture et la présence de la pointe recourbée 13 du crochet 8 en position enclenchée (condition cumulative).

Selon le mode de réalisation représenté sur les figures 2 à 11, le système de détection 10 comprend un levier basculant 16, une pièce flottante 17 faisant office de palpeur, et une transmission d'actionnement mécanique 18 aboutissant à un capteur 15 de type électromécanique.

Le levier 16 est monté parallèlement au crochet 8 et en pivotement autour d'un axe, confondu ici avec l'axe C du crochet. Le levier 16 comporte deux bras disposés de part et d'autre de l'axe C de pivotement, le premier bras 16 s'inscrivant dans la lumière du crochet 8, transversalement à la trajectoire M-M du plot, le second bras 20 étant articulé à son extrémité avec la pièce flottante 17. La pièce 17 est montée, libre en pivotement, sur un axe B d'articulation à l'extrémité du second bras 20. Le levier 16 a une forme de boomerang, les deux bras formant un angle obtus. La pièce flottante 17 comporte deux parties de chaque côté de son axe d'articulation B sur le levier 16, la première partie formant une tête 21 avec une face aplanie qui, au repos, se situe à la périphérie de la trajectoire M-M du plot, la seconde partie de la pièce flottante 17 étant articulée avec des biellettes de transmission d'action mécanique 18 aboutissant à un renvoi d'angle 19 agissant sur le capteur 15.

Un premier ressort (non-visible sur les figures) rappelle le premier bras du levier 16 en direction du plot de verrouillage 6 (rotation du levier 16 en sens inverse des aiguilles d'une montre). Un second ressort (non-représenté) rappelle la pièce flottante 17 et les pièces de transmission mécanique 18 d'actionnement du capteur 15 de façon à éloigner le second bras du renvoi d'angle 19 par rapport au capteur 15 (rotation de la pièce flottante 17 dans le sens des aiguilles d'une montre).

La transmission mécanique comprend une biellette 18, un renvoi d'angle 19 et deux attaches 22,23 reliant respectivement la deuxième partie de la pièce flottante 17 à une extrémité de la biellette 18 et l'autre extrémité de la biellette 18 à un premier bras du renvoi d'angle 19. Le renvoi d'angle 19 comporte un second bras disposé à proximité du capteur 15 pour agir sur celui-ci.

Lorsque, comme illustré sur les figures 3 et 5, la porte 3 est en position ouverte, donc que le plot de verrouillage 6 est hors de sa position de fermeture et que le crochet de verrouillage 8 est en position désengagée (déverrouillage), la pièce flottante 17 est éloignée par le levier 16 hors de la trajectoire M-M du plot et hors de portée du crochet 8. Le renvoi d'angle 19 n'agit pas sur le capteur 15.

Lorsque, comme illustré sur la figure 4, la porte 3 est en position fermée et verrouillée, c'est-à-dire que le plot de verrouillage 6 est en position de fermeture avec le crochet 8 et que le crochet est en position enclenchée, le levier 16 rappelle la pièce flottante 17 vers la position du crochet et la pointe 13 du crochet fait basculer la pièce flottante 17 de sorte que la transmission mécanique 18-19 agit sur le capteur 15. Le capteur est alors dans un état fermé permettant la transmission d'un signal électrique qui indique la réalisation de la double condition : présence du plot crochetable 6 en position de fermeture et présence de la pointe recourbée 13 du crochet 8 en position enclenchée, ce qui signifie que la porte est bien fermée et bien verrouillée.

Les figures 5 à 9 détaillent les configurations successives du système de détection 10 au cours d'une phase de fermeture de l'élément mobile.

La figure 5 illustre l'état du système de détection 10 lorsque l'élément mobile 3 est en position ouverte, c'est-à-dire que le plot de verrouillage 6 est loin de sa position de fermeture avec le crochet 8 et que le crochet de verrouillage 8 est en position désengagée. Le levier 16, sous l'action du premier ressort, éloigne la pièce flottante 17 hors de la trajectoire M-M du plot et à distance de la position occupée par la pointe 13 du crochet 8 dans l'état enclenché. La transmission mécanique 18 repousse le renvoi d'angle 19 sous l'effet du second ressort et n'agit pas sur le capteur 15 (contact ouvert) qui ne délivre pas de signal.

Sur la figure 6, l'élément mobile se referme et on voit que le plot de verrouillage 6 vient au contact du levier 16.

Lorsque, comme représenté sur la figure 7, l'élément mobile atteint pleinement la position fermée, le plot de verrouillage 6 parvient dans sa position de fermeture P et repousse le levier 16 qui rappelle la pièce flottante 17 vers l'intérieur de la trajectoire M-M du plot et vers le crochet 8. Cependant, un tel décalage de la pièce flottante 17 n'exerce pas de traction sur la transmission mécanique 18. En effet, la pièce flottante 17 ainsi que l'attache 22 entre cette pièce 17 et la biellette de transmission 18 présentent une marge de jeu en pivotement. La transmission 18, sous l'effet du second ressort de rappel, maintient le renvoi d'angle 19 écarté par rapport au capteur 15 (contact ouvert, pas de signal).

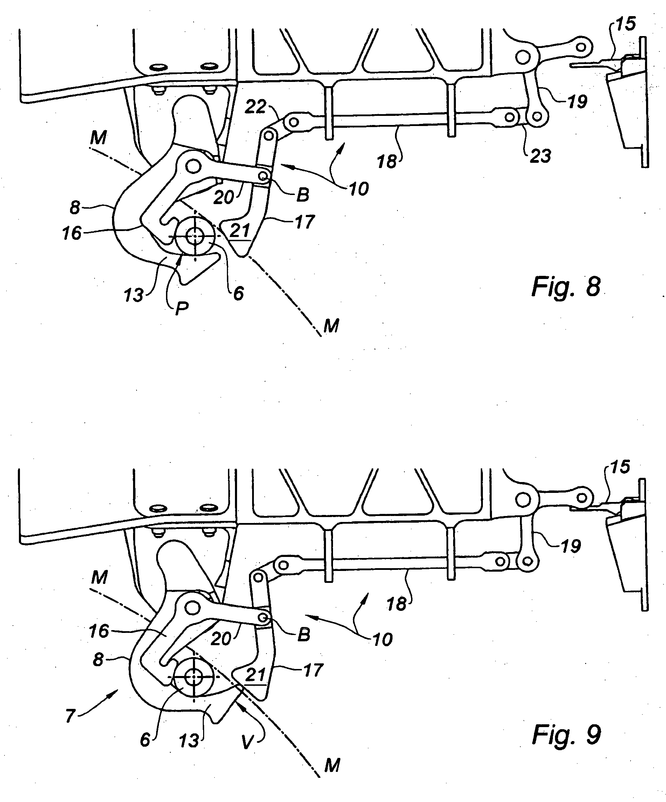

Sur la figure 8, le plot 6 est en position de fermeture P et le crochet 8 est actionné par le vérin (non représenté) vers une position enclenchée afin de verrouiller le plot 6 dans sa position de fermeture P et de maintenir l'élément mobile. Tant que la pointe 13 du crochet n'atteint pas la tête 21 de la pièce flottante 17, le renvoi d'angle 19 de la transmission 18 n'a pas d'action sur le capteur 15.

La figure 9 montre la configuration du dispositif de verrouillage 7 et du système 10 de double détection de fermeture et de verrouillage selon l'invention, lorsque le crochet 8 atteint pleinement sa position enclenchée V et que la pointe recourbée 13 du crochet 8 repousse la pièce flottante 17 dont la tête 21 occupait ladite position V.

La tête 21 de la pièce flottante 17 présente une face aplanie transversale, et de préférence sensiblement perpendiculaire, à la course du crochet 13, donc sensiblement parallèle à la trajectoire M-M du plot 6.

Lorsque le crochet 8 atteint complètement la position enclenchée V, la pointe recourbée 13 du crochet heurte la, face aplanie de la tête 21 de la pièce flottante 17 et la repousse hors de la position enclenchée V, au-delà de la trajectoire M-M du plot. La pièce flottante 17 bascule autour de son axe d'articulation B sur le levier 16, immobilisé par l'engagement du plot de verrouillage 6. Le basculement de la pièce flottante 17 exerce une traction sur l'ensemble de la transmission mécanique 18 (attaches, biellette et renvoi d'angle) qui tire le renvoi d'angle 19 malgré l'effet du second ressort de rappel. Le renvoi d'angle 19 agit sur le capteur 15 de façon à fermer le contact et à transmettre un signal électrique.

Le système de double détection 10 permet ainsi d'indiquer, par un signal unique, la réalisation de la condition combinée dans laquelle le plot de verrouillage 6 est en position de fermeture P et la pointe recourbée 13 du crochet 8 est en position enclenchée V.

Ainsi, le dispositif de verrouillage muni du système de détection selon l'invention permet de vérifier tout à la fois que le plot de verrouillage est bien intègre et en position de fermeture et que le crochet de verrouillage est intègre et en position enclenchée, donc que l'élément mobile est bien fermé et bien verrouillé.

La figure 10 illustre le fonctionnement du système de détection 10 selon l'invention en cas de défaillance au niveau du crochet 8, par exemple lorsque le vérin n'actionne pas le crochet ou lorsque la partie la plus faible du crochet 8 formée par l'extrémité pointue de la partie recourbée est cassée, comme illustré ici. Le plot de verrouillage 6 de l'élément mobile est en position de fermeture et repousse le levier 16 qui rappelle la pièce flottante 21 à l'intérieur de la trajectoire M-M. Le crochet 8 est actionné en verrouillage par le vérin 12 mais la pièce flottante 17, faisant office de palpeur, détecte l'absence de la pointe de la partie recourbée du crochet 8 à l'endroit correspondant normalement à sa position enclenchée. La pièce flottante 17 et la transmission mécanique 18 ne sont pas sollicitées et le renvoi d'angle 19 n'agit pas sur le capteur 15 (contact ouvert) qui ne transmet pas de signal.

Le système permet ainsi de détecter les cas de défaillance dans lesquels la partie recourbée du crochet est absente de la position enclenchée, même si le plot de verrouillage est en position de fermeture.

La figure 11 illustre un autre cas de défaillance au niveau du plot de verrouillage, par exemple si le plot est manquant, détruit ou que la porte est faussée et que le plot n'atteint pas la position d'engagement.

Du fait de l'absence du plot de verrouillage, le levier 16 décale la pièce flottante 17 hors de portée du crochet, au-delà de la trajectoire normale du plot indiquée par la ligne pointillée M-M. Lorsque le crochet 8 est actionné par le vérin 12 et atteint l'endroit correspondant normalement à sa position enclenchée (arrivée du crochet en fin de course), la pointe 13 du crochet ne peut pas agir sur la pièce flottante 17 et la transmission d'action mécanique 18 n'est pas sollicitée. Le capteur 15 est dans l'état contact ouvert et ne délivre pas de signal.

Ainsi, le système de double détection selon l'invention permet de détecter et d'indiquer par l'absence de signal toutes les défaillances dans lesquelles la partie recourbée du crochet est absente de la position enclenchée ou dans lesquelles la pièce crochetable est absente de la position de fermeture.

Bien entendu, le système de double détection selon l'invention peut détecter d'autres cas de défaillance, notamment une conjonction de défaillance du crochet et de défaillance du plot de verrouillage, ces deux pièces complémentaires ayant été arrachées, par exemple.

Le système de double détection selon l'invention s'applique de préférence aux dispositifs de verrouillage primaire montés généralement sur les deux bords latéraux du cadre de chaque élément mobile d'inverseur de poussée de turboréacteur.

Il est à noter que cette double détection est avantageusement obtenue à l'aide d'un seul capteur délivrant un signal unique et que le signal est actif (contact fermé) lorsqu'il n'y a pas de défaut, conformément aux règles de détection de défaillance dans le domaine aéronautique.

De façon avantageuse, l'invention permet d'équiper chaque élément mobile de deux systèmes de détection montés sur les deux dispositifs latéraux de verrouillage primaire de l'élément mobile et de relier les deux capteurs respectifs des deux systèmes de double détection selon l'invention à deux entrées d'une centrale de surveillance notamment de type FADEC ou d'un boîtier électronique de commande numérique de type DECU (en anglais "Digital Electronical Control Unit"), afin de surveiller l'état de chacun des éléments mobiles des inverseurs de l'appareil.

Cependant, le système de double détection, selon l'invention, peut être monté sur d'autres catégories de dispositifs de verrouillage d'élément mobile d'inverseur, notamment sur un dispositif de verrouillage secondaire ou tertiaire.

De plus, bien que l'exemple de réalisation exposé dans la présente fait état d'une porte pivotante, l'invention s'applique à tout type d'élément mobile d'inverseur de poussée, notamment aux inverseurs à panneaux ou à coques rétractables et aux inverseurs à coquilles basculantes montés en aval de certains turboréacteurs à simple flux.

Il est à noter qu'au repos, le dispositif selon l'invention ne supporte pas d'effort mécanique hormis l'appui du levier de détection 16 sur le plot de verrouillage 6 et l'appui de la pointe du crochet 13 sur le palpeur 17 du système de détection. En conséquence, le système, en fonctionnement normal, est très peu sollicité en fatigue mécanique et présente une durée de vie importante.

## Revendications

1. Inverseur de poussée comprenant au moins un élément mobile muni d'au moins un dispositif de verrouillage (7) d'un élément mobile (3) d'inverseur (1) de poussée, ledit dispositif de verrouillage comprenant :
- un crochet (8) ayant une extrémité recourbée (13),
- une pièce crochetable (6) montée sur l'élément mobile et destinée à coopérer avec ledit crochet et,
- un système (10) de double détection de fermeture et de verrouillage comprenant un capteur (15),
- un premier moyen (16) de détection de la pièce crochetable (6) et d'activation d'un second moyen (17) de détection de l'extrémité recourbée (13) du crochet (8),
- le premier moyen de détection comprenant un levier d'armement (16), et
- **caractérisé en ce que** le second moyen de détection comprend au moins une pièce mobile (17,18,19,22) et/ou une pièce flottante (17) reliée au capteur (15).

2. Dispositif selon la revendication 1, dans lequel le crochet (8) et le levier d'armement (16) sont articulés autour d'un même axe (C).

3. Dispositif selon la revendication 2, dans lequel le levier d'armement comporte deux bras (16, 20) situés de part et d'autre de l'axe (C), le premier bras (16) ayant une extrémité susceptible de venir en contact avec la pièce crochetable (6), le second bras (20) ayant une extrémité reliée au second moyen de détection (17).

4. Turboréacteur (2) **caractérisé en ce qu'**il est muni d'un inverseur de poussée (1) selon l'une quelconque des revendications 1 à 3.

## Patentansprüche

1. Schubumkehrer, aufweisend mindestens ein bewegliches Element, das mit mindestens einer Verriegelungsvorrichtung (7) eines beweglichen Elements (3) eines Schubumkehrers (1) ausgestattet ist, wobei die Verriegelungsvorrichtung umfasst:
- einen Haken (8), der mit einem gekrümmten Ende (13) versehen ist,
- ein einhakbares Teil (6), das auf dem beweglichen Element montiert und dazu bestimmt ist, mit dem Haken zusammenzuwirken, und
- ein System (10) zum doppelten Erfassen des Verschließens und Verriegelns, das einen Sensor (15) aufweist,
- eine erste Einrichtung (16) zum Erfassen des einhakbaren Teils (6) und zur Aktivierung einer zweiten Einrichtung (17) zum Erfassen des gekrümmten Endes (13) des Hakens (8),
- wobei die erste Einrichtung zum Erfassen einen Spannhebel (16) aufweist, und
- **dadurch gekennzeichnet ist, dass** die zweite Einrichtung zum Erfassen mindestens ein bewegliches Teil (17, 18, 19, 22) und/oder ein schwimmendes Teil (17) aufweist, das mit dem Sensor (15} verbunden ist.

2. Vorrichtung nach Anspruch 1, wobei der Haken (8) und der Spannhebel (16) um eine gleiche Achse (C) herum angelenkt sind.

3. Vorrichtung nach Anspruch 2, wobei der Spannhebel zwei Arme (16, 20) aufweist, die beiderseits der Achse (C) liegen, wobei der erste Arm (16) mit einem Ende versehen ist, das geeignet ist, mit dem einhakbaren Teil (6) in Kontakt zu kommen, wobei der zweite Arm (20) mit einem Ende versehen ist, das mit der zweiten Einrichtung zum Erfassen (17) verbunden ist.

4. Turbostrahltriebwerk (2), **dadurch gekennzeichnet, dass** es mit einem Schubumkehrer (1)·nach einem der Ansprüche 1 bis 3 ausgestattet ist.

## Claims

1. A thrust reverser comprising at least one mobile element provided with at least one device for locking (7) a mobile element (3) of a thrust reverser (1), said thrust reverser comprising:
- a hook (8) having a crooked end (13),
- a hookable part (6) mounted on the mobile element and configured to cooperate with said hook, and
- a double detection system (10) detecting closure and locking comprising a sensor (15),
- a first means (16) of detecting the hookable part (6) and of activation of a second means (17) of detection of the crooked end (13) of the hook (8),
- the first means of detection comprises a setting lever (16), and
- **characterized in that** the second detection means comprises at least one mobile part (17, 18, 19, 22) and/or a floating part (17) connected to the sensor (15).

2. The device as claimed in claim 1, wherein the hook (8) and the setting lever (16) are hinged about the same axis (C).

3. The device as claimed in claim 2, wherein the setting lever comprises two arms (16, 20) situated on either side of the axis (C), the first arm (16) having an end able to come into contact with the hookable part (6), the second arm (20) having an end connected to the second detection means (17).

4. A turbojet (2), **characterized in that** it is provided with a thrust reverser (1) according to any one of claims 1 to 3.
